# EUROPEAN PATENT APPLICATION

(11) **EP 1 464 228 A1**
(43) Date of publication of application: **06.10.2004**
(21) Application number: 03252144.5
(22) Date of filing: 04.04.2003
(51) Int. Cl.: A22C 29/02, A23L 1/33

(54) **Processed shrimp food and its manufacturing method**

(71) Applicant: Kabushiki Kaisha Yousei, Tokyo 107-0052 (JP)
(72) Inventor: Higuchi, Nobuyuki, Tokyo 107-0052 (JP)
(74) Representative: Jones, Helen Marjorie Meredith

(57) **Abstract**

The manufacturing method of the processed food of shrimp of the present invention enables new processed food of shrimp to be provided, in which it has especially fine eating quality in comparison with conventional processed food of shrimp and degradation does not occur in preservation over a long time. A processed food of shrimp of the present invention contains mainly tail part muscle, in which protein content P, free glysin content Gl, and free proline content Pr satisfy respective conditions of below-described A and B simultaneously. The manufacturing method thereof is that there is obtained heat-treated shrimp in such a way that fresh shrimp is subjected to heat-treating while bringing the fresh shrimp into contact with hot water or saturated steam of not less than 85°C before cooling so that lengthwise direction crush strength (N/cm²) of specimen of the tail part muscle of the shrimp, whose size is 5±0.2 mm thick taken in such a way that the tail part muscle is cut in lateral direction in parallel, falls within the range of 15 to 35 N/cm², upon being measured by a testing machine that is of parallel-plate type pressure testing machine, in which testing is to measure crush strength in lengthwise direction at room temperature.
A: 0.05 ≦ (Gl+Pr)/P≤ 0.09
B: 0.3 ≦ Pr/(Gl+Pr)≤ 0.5

## Description

### BACKGROUND OF THE INVENTION

### 1. Field of the Invention

The present invention relates to a processed food having good storage stability with fresh shrimps as ingredient and particularly relates to a new processed food of shrimp with better taste and its manufacturing method wherein it is possible to inhibit deterioration with time about eating quality of original shrimp, which occurs caused by the fact that component of protein of fresh shrimp is deteriorated.

### 2. Description of the Related Art

Generally, Crustacea such as shrimps or crabs or so forth among fish and shellfish brings about postmortem rigidity caused by discontinuation of vital reaction after death when its capture and water uptakes is performed. Then oxidization of tissue sets in and browning phenomenon caused by out break of hydrogen sulfide makes progress, further, phenomenon in which tissue becomes putrid via softening looks. In order to delay or prevent out break of such undesirable degradation phenomenon in aquatic food, generally, method for refrigerating food product is adopted. However, when eating raw shrimps such as Red Shrimp (Nomenclature: *Pandalus borealis;* Trade name in Europe: Red Shrimp, North Atlantic Prawn or Cold Water Shrimp; Trade name in America: Red Shrimp or Cold Water Shrimp; hereinafter referred to as "Red Shrimp") or Sakura shrimp or so forth, part of bound water included in muscular tissue of the shrimp breaks about drip after unfreezing and then softening of muscular tissue makes progress, therefore refrigeration is not necessarily effective for preventing degradation of eating quality.

Further, although the case is that when eating raw shrimp which has been refrigerated, before the shrimp becomes putrid, there is no effective method for preventing progress of degradation of taste.

On the other hand, when intending to fix the bound water to cellular structure while cooking the raw shrimp, flavor is lost because of forfeit of raw taste, thus preservation administration of raw shrimp was of extremely difficult.

Accordingly, the inventors perform heat-treating to shrimps, which are maintained in fresh conditions just after the time of capture, in such a way as to bring them into contact with hot water more than 85°C or saturated steam with brief exposure thereto. Next, there is taken the heat out of the shrimps immediately after heat-treating to make opaque tail part muscle of the shrimps. Then, there is measured crush strength of specimen of the tail part muscle. The specimen is one whose size is 5 ± 0 . 2 mm thick taken in such a way that the tail part muscle is cut in lateral direction in parallel. Testing machine is of parallel-plate type pressure testing machine. The testing is to measure crush strength in lengthwise direction at room temperature. The inventors have struck out that it is possible to suppress quality degradation of the shrimps after that upon making the specimen strength of 15 to 30N per 1cm² of cross section area thereof. The inventors have made patent application concerning heat-treated shrimp with goods storage stability thus obtained (Japanese Patent Application Laid-Open 2002-253177).

The heat-treated shrimps are capable of being maintained raw taste over the long term. On the other hand, processed food of shrimp such as dried shrimp which is different from fresh shrimp on flavor is kept for a long time. When comparing the heat-treated shrimp with the processed food of shrimp, the heat-treated shrimp has poor storage stability, so that it does not become object to be compared wholly.

### SUMMARY OF THE INVENTION

It is an object of the present invention to provide new processed food of shrimp which has especially fine eating quality in comparison with the conventional processed food of shrimp and which does not suffer by comparison with respect to keeping quality by utilizing manufacturing method of the above-described heat-treated shrimps.

According to a first aspect of the present invention, there is provided a processed food of shrimp which contains tail part muscle mainly, in which protein content **P,** free glysin content **Gl**, and free proline content **Pr** satisfy respective conditions of below-described A and B simultaneously.
A: 0.05 ≦ (**Gl+pr**)/**P** ≦ 0.09
B: 0.3 ≦ **Pr**/(**Gl+Pr**) ≦ 0.5

According to a second aspect of the present invention, there is provided a manufacturing method of processed food of shrimp, wherein there is obtained heat-treated shrimp in such a way that fresh shrimp is subjected to heat-treating while bringing the fresh shrimp into contact with hot water or saturated steam not less than 85°C before cooling so that lengthwise direction crush strength (N/cm²) of specimen of the tail part muscle of the shrimp, whose size is 5±0.2 mm thick taken in such a way that the tail part muscle is cut in lateral direction in parallel, falls within the range of 15 to 35 N/cm², upon being measured by testing machine that is of parallel-plate type pressure testing machine, in which testing is to measure crush strength in lengthwise direction at room temperature, and wherein there is obtained processed food of shrimp containing muscle part mainly in such a way that processing which includes treatment for removing part such as head or so forth unsuitable for eating from said heat-treated shrimp and treatment according to heating or cooling is added so that protein content **P**, free glysin content **Gl,** and free proline content **Pr** satisfy respective conditions of below-described A and B simultaneously.
A: 0.05 **≦** (**Gl+Pr)**/**P ≦** 0.09
B: 0.3 ≦ **Pr**/(**Gl+Pr**) ≦ 0.5

It is preferable that shrimps to be ingredients for manufacturing processed food of shrimp of the present invention are Red Shrimps. However, it is possible to combine to use shrimps with fine eating quality such as a Humpback shrimp or a prawn.

Furthermore, it is necessary that shrimps used for ingredients described above are of fresh shrimps, however it is preferable that there should be performed heat-treatment to the shrimps whose muscle tissue does not lose vital reaction, namely who maintains vital conditions.

Further, processing of heat-treated shrimp includes treatment for removing part such as head or so forth unsuitable for eating and treatment according to heating or cooling, furthermore it is possible to include treatment according to drying or grinding. Thus it is possible to obtain processed food of shrimp of various forms described later upon processing shrimps while combining various kinds of treatments.

A form of the processed food of shrimp of the present invention is made to classify from the perspective of quality of material initially. It is possible to separate the form into, after removing the head, substance which uses muscle part of tail portion in conjunction with a part of tail or shell, substance obtained in such a way that only the shell is removed from the shrimp with no-head, or substance which is of only muscle part while removing the shell and the tail. Furthermore, a form of the processed food of shrimp is made to classify from the perspective of shape of food after processing. It is possible to separate the form into a shrimp served whole which maintains shape of shrimp as it is, a lump goods in which a muscle part is cut to separate largely, minced piece shaped goods or grain shaped goods, ground shrimp meat shaped goods.

Furthermore, there is obtained the processed food while combining these materials and shapes. When it is taken to be refrigerated food as it is, it is possible to utilize as foods of fresh condition after unfreezing, or it is possible to utilize as materials and so forth for another cooking foods via secondary cooking. Or the processed foods are subjected to heat-drying while utilizing warm air or infrared radiation. That is utilized as dried food with lump shape or grain shape. Or it is possible to utilize preferably the dried one as dried food with fine grain shape or powder shape for seasoning, or material of ordinary temperature preservation type instant cooked food.

Further, ground shrimp meat shaped food obtained by grinding treatment put in freezer storage is capable of being used as materials of foods such as boiled shrimp paste. Or that is steamed while forming appropriate shape. It can be taken to be cooked foods upon performing cooking such as roasting. However, a form of the processed food of shrimp of the present invention is not limited to exemplary forms, accordingly it is possible to utilize while processing it to foods with arbitrary form appropriately

Furthermore, it is preferable that when the processed food of shrimp of the present invention is preserved or put into circulation, it is taken to be the form of refrigerated goods or frozen goods.

### BRIEF DESCRIPTION OF THE DRAWINGS

Fig. 1 is a table indicating aspect of raw material shrimp for processed food.
Fig. 2 is a table indicating aspect of processed food.

### DETAILED DESCRIPTION OF THE PREFERRED EMBODIMENTS

There will be described manufacturing method of processed food of shrimp of the present invention. The manufacturing method of processed food of shrimp is comprised of a step for manufacturing heat-treated shrimp of front stage and a step for processing heat-treated shrimp of rear stage. Firstly, there will be described a step for manufacturing the heat-treated shrimp. The step of the front stage is based on the method described in the description of the Japanese Patent Application Laid-Open No.2002-253177 corresponding to previous application fundamentally. The step of the front stage comprises the first step for selecting fresh shrimps, the second step for performing heat-treating to the selected fresh shrimps by heat-treating apparatus including measuring section, heating section and cooling section, and the third step for putting them in cold storage or putting them in freezer storage to store temporary or to transfer if required.

The selection of fresh shrimp in the first step is performed to secure quality of the processed food of shrimp of the present invention and to make treating work more efficient. There is executed separation according to size of the shrimp to eliminate raw material with low property modification effect based on heat-treating and to secure uniformity of heat-treating effect of shrimps upon removing poor freshness and black head for interfusion prevention with exception of purposed shrimps. It should be noted that such selection should be executed in following respective stages of steps if required.

The measuring section in the heat-treating apparatus for executing the second step measures stock amount of material shrimps to be processed by one time, because the heating section of the next stage preferably performs batch-wise processing system. The measuring section is effective one for increasing uniformity of heat-treating effect upon measuring stock amount of material shrimps to be processed by one time. The heating section heats hot water such as real water or salt water in such a way as to supply steam into thermal treatment bath in which the hot water is contained and to heat to 85°C to 99°C. The heating section which stirs the hot water is used, especially, it is preferably that the configuration circulates the hot water using the circulating pump and the circulating pipe for making temperature of the hot water in the bath even. Further, it is preferable that basket and so forth formed by perforated plate is made to submerge into the heat-treating bath beforehand and it is possible to scoop all at once after heat-treating of material shrimps thrown is performed during predetermined time period.

Further, cooling section provided after heating section is of cooling bath in which chilled water such as real water or salt water is contained. It is preferable that configuration circulates chilled water using the circulating pump and the circulating pipe to make temperature of the chilled water within the bath even. It is suitable that the temperature in the cooling bath is not more than 30°C or it is particularly desirable that the temperature is not less than 20°C or more particularly desirable that the temperature is not less than 10°C . However, when there is limitation in the amount of use of chilled water. However, when there is a limit to quantity consumed of chilled water, there are provided 2 cooling bathes at the cooling section and they are made to arrange in series. Temperature of the initial stage of the cooling bath is made to set to, for instance, degree of 30 to 40°C. Temperature of the next stage of the cooling bath is made to set to, for instance, not more than 20°C. By this means, it is preferable that the quantity consumed of such chilled water is made to economize. Further, it is preferable that basket and so forth formed by perforated plate is made to submerge into the cooling bath beforehand that is the same as that of heat-treating bath, and it is possible to scoop all at once chilled material shrimps.

The muscle tissue of the shrimps is subjected to property modification upon giving the shrimps heat-treating in such a way as above. However, its degree of the property modification is decided by treating temperature and treating time, therefore, contact time between heating medium such as hot water or steam or so forth and the shrimps is necessary to adjust appropriately, based on kind and temperature of the heating medium, size of the shrimp, ratio between amount of heating medium and amount of the shrimps and so forth. Especially, it is preferable that the shrimps are in contact with the heating medium during necessary time that crush strength in lengthwise direction at room temperature of 22 to 27°C becomes 15 to 35N per 1cm² of cross section area of the specimen whose size is 5±0.2mm thick taken in such a way that the tail part muscle is cut in lateral direction in parallel. Usually, such contact time is period of degree of one minute to 5 minutes. Furthermore, it is preferable that heating medium is selected in such a way that temperature of the muscle tissue of the shrimps reaches to at least 70 to 75°C.

Thus, the heat-treated shrimps are cooled immediately by chilled water after its processing. In the cooling step, temperature of muscle tissue of the shrimp becomes not more than 65°C rapidly or not more than 55°C preferably, and it is preferable that the property modification of the muscle tissue does not proceed more than necessary. However, it is preferable that the shrimps after heat-treating are cured upon refrigerating the shrimps more perfectly, therefore, it is more preferable that temperature of chilled water is not more than 25°C, furthermore, not more than 20°C, and also not more than 10°C. And then, it is possible to maintain property of the muscle tissue undergoing property modification during over long term upon refrigerating the shrimps after cooling perfectly.

The heat-treated shrimps obtained in such a way as above demonstrates more pleasant taste than raw muscle tissue in that the muscle tissue is subjected to property modification and composition of free protein included in the muscle tissue is changed. Thereupon, in the present invention, following processing treatment is added to processing step of after stage. Namely, there is added processing including treatment for removing part such as uneatable head, treatment according to heating or cooling, further drying treatment or treatment of grinding down by friction or so forth to the above described heat-treated shrimps. Thus, there can be obtained various sorts of processed food of shrimp which is better suited for various uses.

### [Embodiment]

Hereinafter, there will be described processed food of shrimp of the present invention based on the embodiments.

### (Reference Example)

There is captured live Red Shrimps a to select into size of 90 to 120 per 1kg and then putting them into water bath. The live Red Shrimps **a** scooped from the water bath are made to throw into 2% salt solution at 97°C immediately. There is scooped the shrimps immediately after approximately 1 minute heat-treatment. The heat-treated Red Shrimps **b**_{**1**} are manufactured in such a way as to throw to cool them into chilled water at 10°C.

Also, heat-treated Red Shrimps **b**_{**2**}, **b**_{**4**}**, b**_{**8**} are manufactured in such a way as to heat them with heat-treating time of 2, 4, and 8 respectively and another treatments are the same as those of **b**_{**1**}**.** And further, approximately five out of ten is taken to separate from these heat-treated shrimps b1 to **b**_{**8**}**,** and there is refrigerated them by the freezer at -30°C immediately, thus there is manufactured respective frozen heat-treated Red Shrimps **c**₁ to **c**₈.

While, there is manufactured frozen Red Shrimp **d** in such a way as to refrigerate live Red Shrimps **a** scooped from the water bath immediately by the freezer at -30°C . These are kept in cold storage.

Next, respective 10 shrimps are taken out among these live Red Shrimps **a** and the heat-treated Red Shrimps **b**₁ to **b**₈**.** Respective shells are removed. The tail part muscle is cut in the approximately right angle direction against axis. The muscle specimen with thickness of 5±0.2mm is formed and its diameter is measured. Continuously, this muscle specimen is made to put between edges of the parallel-plate type pressure testing machine (SAN science, COMPAC-100 using discoid adaptor). There is obtained maximum load value (N) during that the shrimp specimen is crushed in lengthwise direction until thickness thereof becomes 50%. Next, there is measured lengthwise direction crush strength (N/cm²) per 1 cm² cross area of the muscle specimen. Average value of crush strength obtained with respect to 10 muscle specimens is calculated. And then, its test result is illustrated in table of Fig.1.

On the other hand, there is put the frozen Red Shrimp kept in cold storage into bag of polyethylene. There is unfrozen the frozen Red Shrimp while being subjected to maceration of approximately 10 minutes in the running water at 5 to 10°C , after that, there is taken to separate about 20 shrimps among them as the test specimens. The rests are made to perform heat-treating of approximately 2 minutes while throwing them into salt solution of 2% at 97°C that is the same as above to manufacture heat-treated frozen Red Shrimp **e**₂**.** Approximately the five out of ten of this heat-treated frozen Red Shrimp **e**₂ are taken to separate immediately after manufacturing. Re-frozen heat-treated Red Shrimp **f**_{**2**} is made to manufacture while freezing in the freezer at -30°C. On a parallel with cold storage, muscle specimen is made to prepare from tail part muscle in the same way as above from between frozen Red Shrimp **d** unfrozen and heat-treated frozen Red Shrimp **e**_{**2**}. There is measured crush strength and its test result is indicated in Fig. 1.

Furthermore, there is taken out respective 10 shrimps from the frozen heat-treated Red Shrimps **c**₁ to **c**₈ which are kept in cold storage until now, and the above re-frozen heat-treated Red Shrimp **f**_{**2**}. There is prepared muscle specimen from the tail part muscle of the shrimp in the same way as above, after being unfrozen in the same way as above. There is measured crush strength and its test result is indicated in Fig. 1.

Furthermore, there is performed componential analysis as food product with respective tail part muscles as specimens with respect to above described each Red Shrimp **a**, **b**₁, **b**₂, **b**₄, **b**₈, **c**₁, **c**₂, **c**₄, **c**₈, **d, e**₂, and **f**₂. There is measured protein content **P**, free glysin content **Gl**, free proline content **Pr**. There has been calculated value of **(Gl+Pr)/P** and value of **Pr/(Gl+pr).** On the other hand, 5 valuators evaluate taste of respective tail part muscles. The results are put in order of preeminent, excellent, goods, average, and failure while averaging the results. These results are indicated in table of Fig.1.

Furthermore, as the shrimps for comparison, there are manufactured heat-treated shrimp **g** and heat-treated shrimp **h** in such a way that fresh black tiger and Hokkai shrimp are made to perform approximately 2-minute heat-treating within 2%-salt solution at 97°C in the same way as above. There is executed componential analysis about the tail part muscle in the same way as above. And then there is performed evaluation of taste and averaging the results to put them in order of 5 stages of preeminent, excellent, goods, average, and failure. These results are indicated in table of Fig.1.

According to Fig. 1, as to the heat-treated Red Shrimp obtained in such a way as to perform heat-treating of fresh Red Shrimp, content of glysin to be free protein within muscle tissue decreases and content of proline increases. The shrimp being subjected to heat treating so that lengthwise direction crush strength (N/cm²) of the tail part muscle of the shrimp falls within the range of 15 to 35 N/cm², particularly, falls within the range of 20 to 30 N/cm² has the most delicious taste, thus there is found that it is best suited to material of processed food of shrimp. On the other hand, although content of free protein increases in frozen Red Shrimp, ratio of content of proline to content of glysin decreases, resulting in poor taste. Improvement effect of delicious taste due to heat-treatment is specific one to live Red Shrimp. There is no effect due to heat-treating to Red Shrimps being subjected to freezing treatment once. There is found that effect due to heat-treating is immune to refrigeration and unfreezing too mach.

### (First Embodiment)

The live Red Shrimp **a** used in referential example, the frozen Red Shrimp **d,** and the frozen heat-treated Red Shrimp **c**₂ are taken to as material. There is added processing so as to leave only muscle of tail part upon removing each head, shell and tail. There is manufactured respective processed foods of shrimp **A, B** of contrastive goods and processed food of shrimp **C** of goods of the present invention. Aspects of these processed food of shrimp is one which is indicated in FIG. 2. The processed food of the shrimp of the present invention has more delicious taste in comparison with the processed food of the shrimp of the contrastive goods. Further, when curing over the long term, it is possible to perform freezing processing as the secondary processing respectively. Thus, it is possible to utilize them as cooking material such as various cooking.

### (Second Embodiment)

Like the first embodiment, the live Red Shrimp **a** used in referential example, the frozen Red Shrimp **d,** and the frozen heat-treated Red Shrimp **c**₂ are taken to as material. There is added processing so as to leave only muscle of tail part upon removing each head, shell and tail. These are arranged on shelves toward which a warm air drying machine blows in dried warm air at 40°C. By doing this, there is manufactured respective processed foods of shrimp **D**, **E** of contrastive goods and processed food of shrimp **F** of goods of the present invention. Fig. 2 shows the aspect of these processed food of shrimp. The processed food of shrimp **F** of the present invention has better taste clearly as compared to the processed food of shrimp of contrastive goods. This is suitable for storage over a long time, and it is possible to utilize as materials used for various kinds of cooking and a seasoning and so forth.

### (Third Embodiment)

The frozen Red Shrimp **d** and frozen heat-treated Red Shrimp **c**₂ which are used in the second embodiment are taken as the ingredients. There is added processing so as to leave only muscle of tail part upon removing each head, shell and tail. These are arranged on shelves toward which a hot air drying machine blows in dried hot air at 80°C. By doing this, there is manufactured respective processed foods of shrimp **G** of contrastive goods and processed food of shrimp **H** of goods of the present invention. Fig. 2 shows the aspect of these processed food of shrimp. The processed food of shrimp **H** of the present invention has better taste clearly as compared to the processed food of shrimp **G** of contrastive goods. This is suitable for storage over a long time, and it is possible to utilize as materials used for various kinds of cooking a seasoning, and something to nibble and so forth.

### (Fourth Embodiment)

Like the third embodiment, the frozen Red Shrimp **d** and frozen heat-treated Red Shrimp **c**₂ are taken as the ingredients. There is added processing so as to leave only muscle of tail part upon removing each head, shell and tail. This is cut into minced shrimp with thickness of degree of 5mm. These are arranged on shelves toward which a warm air drying machine blows in dried warm air at 40°C to dry. By doing this, there is manufactured respective processed foods of shrimp **I** of contrastive goods and processed food of shrimp **J** of goods of the present invention. Fig. 2 shows the aspect of these processed food of shrimp. The processed food of shrimp **J** of the present invention has better taste clearly as compared to the processed food of shrimp **I** of contrastive goods. This is suitable for storage over a long time, and it is possible to preferably utilize as materials used for various kinds of cooking, a seasoning, and particularly something to nibble and so forth.

### (Fifth Embodiment)

The frozen heat-treated Red Shrimp **c**₂ which are used in the fourth embodiment are taken as the ingredients. There is added processing so as to leave only muscle of tail part upon removing each head, shell and tail. This is cut into minced shrimp with thickness of degree of 5mm. These are arranged on shelves toward which a warm air drying machine blows in dried warm air at 40°C to dry. By doing this, there is manufactured processed food of shrimp **K** of goods of the present invention. Fig. 2 shows the aspect of the processed food of shrimp **K**.

This is suitable for storage over a long time, and it is possible to preferably utilize as materials used for various kinds of cooking and a seasoning. In addition thereto, it is effective for supply of calcium, and particularly it is preferable to use as something to nibble, a snack and so forth.

### (Sixth Embodiment)

Like the fifth embodiment, the frozen heat-treated Red Shrimp c₂ which is taken as the ingredients. There is added processing so as to leave only muscle of tail part with shell upon removing head. These are arranged on shelves toward which a warm air drying machine blows in dried warm air at 40°C to dry. By doing this, there is manufactured processed food of shrimp L of goods of the present invention. Fig. 2 shows the aspect of the processed food of shrimp **L**. This is suitable for storage over a long time, and it is possible to preferably utilize as materials used for various kinds of cooking and a seasoning. In addition thereto, it is effective for supply of calcium, and particularly it is preferable to use as something to nibble, a snack and so forth.

### (Seventh Embodiment)

Like the Fifth embodiment, the frozen heat-treated Red Shrimp **c**₂ which are used in the fourth embodiment are taken as the ingredients. There is added processing so as to leave only muscle of tail part with shell upon removing head. These are arranged on shelves toward which a hot air drying machine blows in dried hot air at 80°C. This is subjected to fine grinding by the grinder, and there is manufactured powdery processed food of shrimp **M**. Fig. 2 shows the aspect of the processed food of shrimp **M**. This is suitable for storage over a long time, and it is possible to preferably utilize as materials used for various kinds of cooking and particularly a seasoning or a seasoned powder for sprinkling over rice. In addition thereto, it is effective for supply of calcium.

### (Eighth Embodiment)

The frozen heat-treated Red Shrimp **c**₂ which are used in the seventh embodiment are taken as the ingredients. There is added processing so as to leave only muscle of tail part upon removing each head, shell and tail.

This is made to mince into appropriate size, after that, it is thrown into a grinder to grind down and then there is manufactured processed food of shrimps **N** of the present invention formed as ground fish meat. Fig. 2 shows the aspect of the processed food of shrimp **N** which has better taste. This is made round into shape of dumpling and so forth. They are capable of being made shape of boiled fish paste or shape of a cake of pounded fish in such a way as to steam or roast. In particular, they are not only suitable for cooking material, but also it is possible to utilize as materials for manufacturing various kinds of foods.

### (Ninth Embodiment)

There is combined the processed food of shrimp **I** of contrastive goods with the frozen Red Shrimp **d** as the ingredients and the processed food of shrimp **J** of goods of the present invention with the frozen heat-treated Red Shrimp **c**₂ as the ingredients, which are manufactured at the fourth embodiment, wherein each amount of which becomes equal. The mixtures are subjected to fine grinding using a grinder and mixed evenly and then there is manufactured processed food of shrimp **P** of goods of the present invention. Fig. 2 shows the aspect of this processed food of shrimp **P**. The processed food of shrimp **P** of the present invention has better taste. This is suitable for storage over a long time, and it is possible to preferably utilize as materials used for various kinds of cooking and a seasoning and so forth.

According to the processed food of shrimp of the present invention, there is obtained heat-treated Red Shrimp in such a way as to bring the live Red Shrimps into contact with hot water or saturated steam not less than 85°C. The processed food of the shrimp is manufactured in such a way as to add processing to the ingredient with the heat-treated Red Shrimp as the ingredients.

There is performed heat-treating in the condition that the muscle of shrimp becomes the most pleasant taste, therefore, it is a characteristic that composition of free protein included in the muscle falls within specific range. For this reason, there is provided peculiar taste in that the obtained one is richer in flavor than original taste of live Red Shrimp. Furthermore, this does not deteriorate over a long time. And this has superior effect that it is possible to produce the processed food with complete quality in large quantities. This is superior than the conventional processed food of shrimp incomparably. Thus, it is possible to provide new processed food of shrimp.

## Claims

1. A manufacturing method of processed food of shrimp, wherein there is obtained heat-treated shrimp in such a way that fresh shrimp is subjected to heat-treating while bringing the fresh shrimp into contact with hot water or saturated steam not less than 85°C before cooling so that lengthwise direction crush strength (N/cm²) of specimen of the tail part muscle of the shrimp, whose size is 5±0.2 mm thick taken in such a way that the tail part muscle is cut in lateral direction in parallel, falls within the range of 15 to 35 N/cm², upon being measured by testing machine that is of parallel-plate type pressure testing machine, in which testing is to measure crush strength in lengthwise direction at room temperature; and
wherein there is obtained processed food of shrimp containing muscle part mainly in such a way that processing which includes treatment for removing part such as head or so forth unsuitable for eating from said heat-treated shrimp and treatment according to heating or cooling is added so that protein content **P**, free glysin content **Gl,** and free proline content **Pr** satisfy respective conditions of below-described A and B simultaneously.
A: 0.05 ≦ (**Gl+pr**) /**P** ≦ 0.09
B: 0.3 ≦ **Pr**/(**Gl+Pr**) ≦ 0.5

2. The manufacturing method of processed food of shrimp according to claim 1, wherein said shrimp is Red Shrimp.

3. The manufacturing method of processed food of shrimp according to claim 1 or claim 2, wherein said fresh shrimp maintains the state in which a muscle tissue does not lose vital reaction.

4. The manufacturing method of processed food of shrimp described in any one of claim 1 to claim 3, wherein said processing is one including drying treatment.

5. The manufacturing method of processed food of shrimp described in any one of claim 1 to claim 4, wherein said processing is one including grinding treatment.

6. A processed food of shrimp containing tail part muscle mainly,
wherein protein content **P**, free glysin content **Gl,** and free proline content **Pr** satisfy respective conditions of below-described A and B simultaneously.
A: 0.05 ≦ **(Gl+Pr)/P** ≦ 0.09
B: 0.3 **≦ Pr/(Gl+Pr) ≦** 0.5

7. The processed food of shrimp according to claim 6, wherein said shrimp is Red Shrimp.

8. The processed food of shrimp according to claim 6 or claim 7, wherein said processed food of shrimp contains a shell part of said shrimp.

9. The processed food of shrimp described in any one of claim 6 to claim 8, wherein said processed food of shrimp is of minced piece shaped goods or a lump shaped goods, obtained in such a way that a form of shrimp is minced.

10. The processed food of shrimp described in any one of claim 6 to claim 9, wherein a form of said processed food of shrimp is of ground fish meat shaped goods.

11. The processed food of shrimp described in any one of claim 6 to claim 10, wherein a form of said processed food of shrimp is of dried powder shaped goods or a lump shaped goods.

12. The processed food of shrimp described in any one of claim 6 to claim 11, wherein a form of said processed food of shrimp is of food made from shrimp paste undergoing heat-treatment.

13. The processed food of shrimp described in any one of claim 6 to claim 12, wherein a form of said processed food of shrimp at the time of preservation or distribution is of refrigerated goods or frozen goods.

## Amended claims

### Amended claims in accordance with Rule 86(2) EPC.

**1.** A manufacturing method of processed food of shrimps, whereby heat-treated shrimps are obtained in such a way that the fresh shrimps are subjected to the heat-treating while bringing the fresh shrimps into contact with hot water at 85°C or higher, or saturated steam, then, cooled so that the lengthwise direction elasticity strength (N/cm²) of a specimen of the tail part muscle of the shrimps, whose size is 5±0.2 mm thick taken in such a way that the tail part muscle is cut in lateral direction in parallel, falls within the range of 15 N/cm² to 35 N/cm², upon being measured by a parallel-plate type pressure-testing machine, in which testing is to measure elasticity strength in the lengthwise direction at a room temperature; and
wherein the processed food of the shrimps containing mainly the tail part muscle is obtained in such a way that processing which includes a treatment for removing part such as the head or other parts unsuitable for eating from said heat-treated shrimps and a treatment according to heating or cooling is added so that protein content **P**, free glysin content **Gl,** and free proline content **Pr** satisfy the respective conditions of below-described A and B simultaneously.
A: 0.05 ≦ (**Gl+Pr**)/**P ≦** 0.09
B: 0.3 ≦ **Pr**/(**Gl+Pr**) **≦** 0.5

**2.** The manufacturing method of the processed food of the shrimps according to claim 1, wherein said fresh shrimps are Red Shrimps.

**3.** The manufacturing method of the processed food of the shrimps according to claim 1, wherein said fresh shrimps maintain the state in which the muscle tissue does not lose a vital function.

**4.** The manufacturing method of the processed food of the shrimps according to claim 1, wherein said processing is one including a drying treatment.

**5.** The manufacturing method of the processed food of the shrimps according to claim 1, wherein said processing is one including a grinding treatment.

**6.** A processed food of the heat-treated fresh shrimps containing a tail part muscle mainly,
wherein protein content **P,** free glysin content **Gl,** and free proline content **Pr** satisfy respective conditions of below-described A and B simultaneously.
A: 0.05 ≦ (**Gl+Pr**)/**P ≦** 0.09
B: 0.3 ≦ **Pr**/(**Gl+Pr**) ≦ 0.5

**7.** The processed food of the shrimps according to claim 6, wherein said fresh shrimps are Red Shrimps.

**8.** The processed food of the shrimps according to claim 6, wherein said processed food of the shrimps contains a shell part of said fresh shrimps.

**9.** The reprocessed food of the shrimps according to claim 6, wherein siad processed food of the shrimps is of a ground shrimp muscle shaped pieces.

**10.** The reprocessed food of the shrimps according to claim 9, wherein said processed food of the shrimps is of food made of said ground shrimp muscle shaped undergoing heat-treatment.

**11.** The reprocessed food of the shrimps according to claim 6, wherein said processed food of the shrimps is one of a number of shapes; lump shaped pieces or a mince piece shaped pieces or powder shaped pieces, obtained in such a way that a form of the shrimps is cut.

**12.** The reprocessed food of the shrimps according to claim 6, wherein said processed food of the shrimps at the time of preservation or distribution is refrigerated or frozen.

**13.** The reprocessed food of the shrimps according to claim 11, wherein said processed food of the shrimps is in dried lump shaped pieces, dried minced shaped pieces or dried said powder shaped pieces.
